# EUROPEAN PATENT APPLICATION

(11) **EP 2 489 992 A1**
(43) Date of publication of application: **22.08.2012**
(21) Application number: 12155895.1
(22) Date of filing: 17.02.2012
(51) Int. Cl.: G01F 1/38, G01F 15/00, G01N 35/10

(54) **Liquid metering device**

(30) Priority: 21.02.2011 CH 3002011
(71) Applicant: CSEM Centre Suisse d'Electronique et de Microtechnique SA - Recherche et Développement, 2002 Neuchâtel (CH)
(72) Inventor: Schmid, Noa, 6010 Kriens (CH); Auerswald, Janko, 6004 Luzern (CH)
(74) Representative: GLN

(57) **Abstract**

The present invention concerns a liquid-based metering device comprising:
- at least one dispensing tip,
- a non-positive displacement and bi-directional pump for dispensing a liquid,
- a differential pressure flow sensing device comprising two pressure sensors,
- a control circuit for driving the pump and the dispensing operation,

**characterized in that** the pressure sensors of the differential pressure flow sensing device are facing a substrate and are mounted on the said substrate and in that the said substrate comprises the electrical connections for the connection of the pressure sensors, the said pressure sensors comprising membranes which are facing the liquid and the said control circuit being connected to the pump and to said substrate.

## Description

### Field of the invention

The present invention relates to the general technical filed of metering, dosing, liquid handling systems, commonly applied in the lab automation field.

### State of the Art

Pipetting systems which are running on system liquid (also referred to as hydraulic or liquid displacement systems), are offered by different fabricants such as Tecan, Beckman Coulter, Zinsser Analytic and others and are all using remote syringe pumps (sometimes also referred to as diluter). In a few cases gearwheel or peristaltic pumps are also used.

However, none of these systems are small enough to be able to directly approach a micro-titerplate (for instance a 9 mm grid) without any tubing between the pump and the pipette tip. Especially systems with syringe pumps require relatively long tubing and many fittings.

Long tubing increases the amount of liquid between the pipette tip and the pump. This increases the mass to be accelerated which is detrimental to the dispensing process of small volumes (called droplets).

Long tubing also increases the probability of trapping air bubbles and due to their flexibility they can affect the precision of the dispensing process. Additionally, moving tubing or any tubing hitting another object can change the geometry of the tubing, which in turn can provoke volumes to be dispensed without intend.

Furthermore, syringe pumps are bulky, relatively expensive and do not provide flow through capabilities. Additionally, a syringe pump can only generate a constant flow rate for as long as the piston does not reach the end of the cylinder. After that, the piston of the syringe needs to 'reload'. Syringe pumps have also wearable sealings.

### Summary of the invention

It is the object of this invention to enhance known metering devices and/or pipetting systems in order to approach a micro-titerplate on a 9 mm grid and to avoid the need of any flexible and moving tubing between the pump, the flow sensors and the micro-titerplate.

It is the object of this invention to minimize the amount of liquid volume between the pump and the pipette tip, thus less liquid mass needs to be accelerated and less liquid needs to be exchanged.

This is crucial in a dispensing application where different liquids need to be dispensed through the same pump (e.g. a manifold with several liquids and each with its own valve can directly be placed above the pump).

It is the object of this invention to substitute current positive displacement pumps (syringe pump, peristaltic, gearwheel pumps) of the state of the art pipetting systems by non-positive displacement and bi-directional pumps.

The objects given to the invention are achieved with the help of a iquid-based metering device comprising:
- at least one dispensing tip,
- a non-positive displacement and bi-directional pump for dispensing a liquid,
- a differential pressure flow sensing device comprising two pressure sensors,
- a control circuit for driving the pump and the aspiration and dispensing operation,
**characterized in that** the pressure sensors of the differential pressure flow sensing device are facing a substrate and are mounted on the said substrate and in that the said substrate comprises the electrical connections for the connection of the pressure sensors, the said pressure sensors comprising membranes which are facing the liquid and the said control circuit being connected to the pump and to said substrate.

In an embodiment of the liquid-based metering in accordance with the invention, the thickness (width or depth) of the said device is smaller than 9 mm. The entire device, including pump, flow sensor and potential manifold including valve(s), presents a width or depth that is smaller than 9 mm. In order to avoid that each channel would touch another adjacent channel, 8.5 mm is preferably the maximum tolerable width or depth.

In an embodiment of the liquid-based metering in accordance with the invention, the pump is a flow-through or adhesion or viscous drag pump. An exemplary embodiment of such a pump is described for instance in document US 2010/0183459.

In an embodiment of the liquid-based metering in accordance with the invention, the substrate is a glass based material.

In an embodiment in accordance with the invention, the pressure sensors are flipped and their circuitries face the circuitry of the glass substrate. The conductivity between the conductive pads on the sensor and the corresponding conductive pads on the glass substrate is warranted with an anisotropic conductive adhesive.

Thus, the liquid-based metering device can comprise two commercial pressure sensors which are affixed on the substrate. This constitutes a much more flexible, simple and economic solution than the use of an integrated system.

In an embodiment of the liquid-based metering in accordance with the invention, the pressure sensors are located so as to measure the pressure on an upstream side and a downstream side of an exchangeable fluidic restriction which is set in the flow of the liquid.

In an embodiment of the liquid-based metering in accordance with the invention, the dispensing tip and/or a tubing connector is integral with the fluidic restriction so that it can be removed together with the said fluidic restriction and replaced, depending on the current application. The flow range and the flow-rate sensitivity can so quickly be changed or adapted.

The objects given to the invention are also achieved with the help of a pipetting system comprising at least a micro-titerplate and at least a liquid-based metering device as described above.

The metering device in accordance with the invention combines this small pulsation-free, flow-through pump with a differential pressure based flow-rate sensing device and so substantially improves the precision of the dispensing of small and very small volumes of liquid.

The use of two pressure sensors in the differential pressure flow-rate sensing device not only enables flow measurement but also the measurement of the pressure in the pipette tip and thus detecting potential irregularities.

Since the parts are simpler/smaller, the entire device could also be manufactured for lesser costs than the costs for manufacturing a syringe pump based system.

Since the volume between tip and pump is much smaller, switching from one dispensing solution to another is much faster and less waste is produced when one needs to switch from one dispensing solution to another.

### Brief description of the drawings

The invention and its advantages appear in greater detail from the following description of an embodiment given by way of illustration and with reference to the accompanying figures, in which:
- figure 1 is a schematic illustration of an embodiment of a liquid-based metering device in accordance with the invention;
- figure 2 is a perspective view of a pump integrated with a flow sensing module extending directly above micro-titerplate of an embodiment of pipetting system in accordance with the invention;
- figure 3 shows a section view of a detail of figure 2;
- and figure 4 illustrates a detail of an embodiment of a liquid-based metering device in accordance with the invention, showing a flipped pressure sensors on a glass-substrate with metallic circuitry.

### Detailed description of the preferred embodiment

Elements that are structurally and functionally identical, and that are present in more than one distinct figure or illustration, are given the same numeric or alphanumeric reference in each of them.

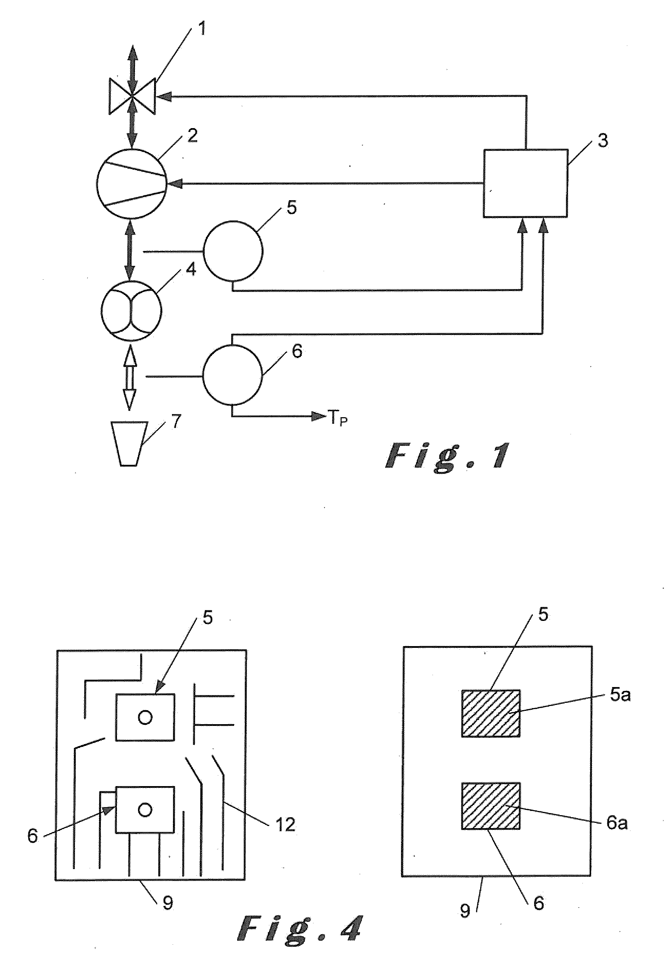

Figure 1 is a schematic illustration of an embodiment of a liquid-based metering device in accordance with the invention. The liquid-based metering device comprises a valve 1 in fluidic communication with a reservoir (not shown) and a pump 2. The valve 1 is for instance a 2-way valve to stop the flow entirely.

The pump 2 is driven by a control circuit 3 which undertakes a closed loop control which controls also the opening and closing of the valve 1. It also works with an open loop control e.g. motor controller simply provides current/voltage profile to the motor or motor is provided with an encoder (tachometer) and motor controller provides/sets a velocity profile. In this case flow sensor works as a monitoring device and its information can be used to slightly adapt current/voltage profile in the next dispensing procedure (if necessary).

Especially, the control circuit sets the rotation speed of the pump motor.

The liquid-based metering device comprises also a fluidic restriction 4 which is set in the flow of the liquid to be dispensed.

A first pressure sensor 5 measures the pressure of the liquid in a location extending upstream the exchangeable fluidic restriction 4 and a second pressure sensor 6 measures the pressure of the liquid in a location extending downstream the fluidic restriction 4.

The measured information provided by the pressure sensors 5 and 6 is delivered to the control circuit 3 which is able to determine or to compute differential pressure values.

The second pressure sensor 6 delivers also the measured tip pressure Tp within a tip 7 which delivers the liquid volumes to a micro-titerplate 8.

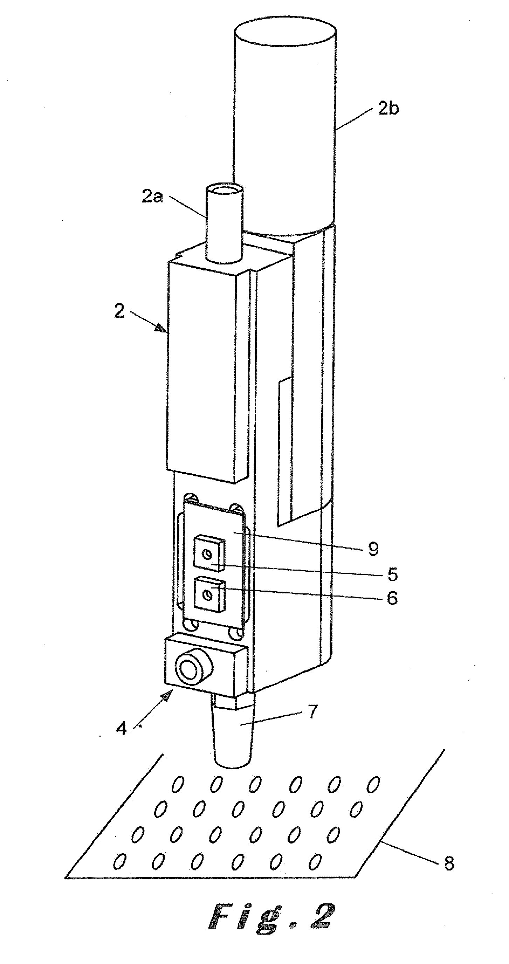

Figure 2 is a perspective view of a pump integrated with a flow sensing module extending directly above a micro-titerplate 8 of an embodiment of pipetting system in accordance with the invention. An inlet 2a of the pump 2 as well a pump motor 2b, are also shown on figure 2.

The pressure sensors 5 and 6 of the differential pressure flow sensing device are facing a substrate 9 and are mounted on the said substrate 9. The substrate 9 comprises the electrical connections for the connection of the pressure sensors 5 and 6. The said pressure sensors 5 and 6 comprise membranes 5a, 6a which are facing the liquid and the said control circuit 3 is connected to the pump 2 and to said substrate 9. The substrate 9 is advantageously a glass substrate.

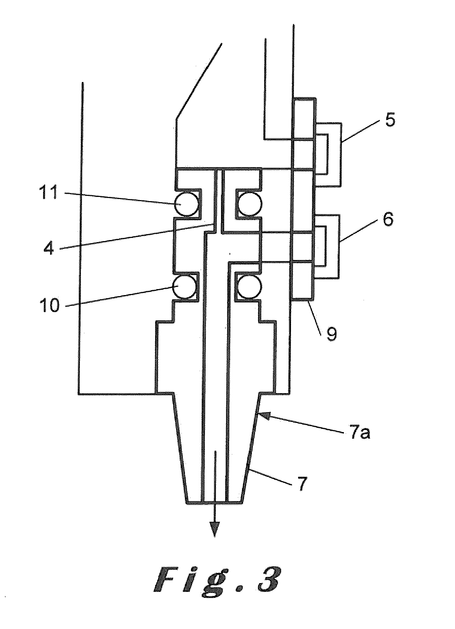

Figure 3 shows a section view of a detail of figure 2. In this embodiment, the tip 7 is integral with a tubing connector 7a which integrates the fluidic restriction 4. This one piece element comprising the tubing connector 7a and the dispensing tip 7 can so be removed and replaced for different applications.

The tip 7 comprises advantageously sealing rings 10 and 11 in order to avoid any leakage of liquid during the dispensing operations. The upper sealing ring 11 is needed (but system would work without this upper sealing also) to ensure that all liquid is flowing through the fluidic restriction 4 and the lower sealing ring 10 is needed to prevent any leakage during pipetting procedures such as aspiration as well as dispensation.

Figure 4 illustrates a detail of an embodiment of a liquid-based metering device in accordance with the invention, showing flipped pressure sensors on the glass-substrate 9 with metallic circuit paths 12. The first drawing corresponds to a top view showing the sensor parts exposed to atmospheric pressure. The second drawing corresponds to a bottom view showing membranes 5a and 6a of the respective pressure sensors 5 and 6, which are in contact with the liquid.

The control circuit 3 comprises a print circuit board which is provided with a spring contact connector such that it can easily connect and disconnect with the circuitry of the glass substrate 9. The circuit board advantageously comprises sensor amplifications means.

The pressure sensors 5 and 6 are flip chip bonded on to the glass substrate 9 with the metallic circuit paths 12.

As opposed to wire-bonding, flip-chip bonding has the advantage that the pressure sensing membrane 5a and 6a are in direct contact with the liquid and only a relatively small area has to be exposed to it.

The backside of the pressure sensors 5 and 6 are not exposed to the liquid because it could easily trap liquid, air-bubbles, particles etc.

The invention enables that there are no exposed wires which would have to be covered with a soft material (e.g. gel) such that the pressure can be transmitted onto the membranes 5a and 6a. By having no gel the response of the pressure sensors 5 and 6 is also improved, since less mass needs to be accelerated.

The pressure sensors 5 and 5 are advantageously attached to the glass substrate 9 with an anisotropic conductive adhesive (ACA). This adhesive attaches the sensors 5 and 6 to the glass substrate 9 and seals the sensor membranes 5a and 6a. This adhesive also ensures that the conductive pads on the membranes 5a and 6a are electrically connected to the metallic circuit paths 11 on the glass-substrate 9 without provoking any short-circuit-faults.

This invention integrates a small pump 2 with a flow rate sensing device based on a differential pressure flow measurement. It utilizes two differential pressure sensing dies to directly measure the flow by measuring the pressured drop over the fluidic restriction 4. This results of the Hagen-Poiseuille law, which states that the pressure drop over a channel is directly proportional to the flow-rate.

Due to the integrated flow measurement, the use of a non-positive displacement pump 2, can essentially emulate a positive displacement pump. If the flow resistance increases, the flow-rate sensing device detects a smaller flow and the pump 2 -motor 2b increases its rotational speed accordingly. The pressure and flow rate that the pump can provide is also proportional to the rotational speed of the pump.

Since the pump it is a flow-through pump which is not limited by the volume of a syringe or the length of a piston, the liquid-based metering device according to the invention can emulate a syringe pump with an unlimited volume.

Naturally, the present invention can be subjected to numerous variations as to its implementation. Although, several embodiments and implementations are described above, it should readily be understood that it is not conceivable to identify exhaustively all possible variants. It is, naturally, possible to envisage replacing any of the means described with equivalent means without going beyond the ambit of the present invention.

## Claims

1. A liquid-based metering device comprising:
- at least one dispensing tip,
- a non-positive displacement and bi-directional pump for dispensing a liquid,
- a differential pressure flow sensing device comprising two pressure sensors,
- a control circuit for driving the pump and the aspiration and dispensing operation, **characterized in that** the pressure sensors of the differential pressure flow sensing device are facing a substrate and are mounted on the said substrate and **in that** the said substrate comprises the electrical connections for the connection of the pressure sensors, the said pressure sensors comprising membranes which are facing the liquid and the said control circuit being connected to the pump and to said substrate.

2. The liquid-based metering device according to claim 1, **characterized in that** its thickness, width or depth is smaller or equal to 9 mm.

3. The liquid-based metering device according to claim 1 or 2, **characterized in that** the pump is a flow-through or adhesion or viscous drag pump.

4. The liquid-based metering device according to any of the claims 1 to 3, **characterized in that** the substrate is a glass based material.

5. The liquid-based metering device according to any of the claims 1 to 4, **characterized in that** the substrate is a glass based material with two flipped pressure sensors.

6. The liquid-based metering device according to any of the claims 1 to 5, **characterized in that** the pressure sensors are located so as to measure the pressure on an upstream side and a downstream side of an exchangeable fluidic restriction which is set in the flow of the liquid.

7. The liquid-based metering device according to any of the claims 1 to 6, **characterized in that** the dispensing tip and/or a tubing connector is integral with the fluidic restriction so that it can be removed together with the said fluidic restriction and replaced, depending on the current application.

8. Pipetting system comprising at least a micro-titerplate and at least a liquid-based metering device according to any of the claims 1 to 7.
